# FASCICULE DE BREVET EUROPEEN

(11) **EP 4 291 756 B1**
(45) Date de publication et mention de la délivrance du brevet: **19.08.2026**
(21) Numéro de dépôt: 22708191.6
(22) Date de dépôt: 03.02.2022
(51) Int. Cl.: F01D 5/18

(54) **PAROI POURVUE D'UN ORIFICE DE REFROIDISSEMENT AYANT UNE PORTION DE DIFFUSION A SECTION TRIANGULAIRE**
WAND MIT KÜHLÖFFNUNG MIT DREIECKIGEM DIFFUSIONSABSCHNITT
WALL PROVIDED WITH A COOLING ORIFICE HAVING A TRIANGULAR-SECTION DIFFUSION PORTION

(30) Priorité: 10.02.2021 FR 2101246
(43) Date de publication de la demande: 20.12.2023
(73) Titulaire: SAFRAN AIRCRAFT ENGINES, 75015 Paris (FR)
(72) Inventeur: SLUSARZ, Michel, 77550 MOISSY-CRAMAYEL (FR); MUGNIER, Kevin Michael, 77550 MOISSY-CRAMAYEL (FR)
(74) Mandataire: Santarelli
(86) Numéro de dépôt international: PCT/FR2022/050206
(87) Numéro de publication internationale: WO 2022/171950

(56) Documents cités:
- US-A1- 2005 286 998
- US-A1- 2013 205 787
- US-A1- 2013 206 733
- US-A1- 2013 209 236

## Description

### Domaine technique

L'invention se rapporte au domaine des turbomachines d'aéronef et au domaine du refroidissement par film d'air de composants tels que des aubes de turbine.

### État de la technique antérieure

Une turbine de turbomachine conventionnelle comprend au moins un distributeur et au moins une roue mobile comportant chacun des aubes exposées à des gaz chauds de combustion.

Afin de préserver l'intégrité mécanique des aubes, il est connu d'y introduire de l'air frais et de les pourvoir d'orifices de refroidissement configurés pour orienter une partie de cet air frais sur leur surface externe de manière à former un film de protection thermique.

Un orifice de refroidissement d'aube conventionnel comprend une portion de dosage, aussi appelée « portion calibrante », généralement cylindrique qui permet de régler la quantité d'air traversant cet orifice et une portion de diffusion évasée améliorant la répartition de l'air de refroidissement sur la surface externe de l'aube. Un exemple est divulgué dans la demande de brevet US 2005/286998.

Le flux d'air frais sortant d'un orifice de refroidissement conventionnel est exposé à des tourbillons contrarotatifs qui se forment au niveau de la section de sortie de cet orifice, ce qui entraîne un décollement du flux d'air frais et une ingestion de gaz chauds au sein de l'orifice de refroidissement. Il en résulte une diminution de l'efficacité du refroidissement.

### Exposé de l'invention

Un but de l'invention est de procurer une géométrie d'orifice de refroidissement permettant d'augmenter l'efficacité du refroidissement.

A cet effet, l'invention a pour objet un composant pour turbomachine, selon les caractéristiques de la revendication 1. L'invention permet d'accentuer le phénomène d'éloignement progressif des tourbillons contrarotatifs du fond de la portion de diffusion et d'éloignement correspondant du fluide canalisé par le fond de la portion de diffusion de la zone d'influence de tels tourbillons. Des arêtes latérales plus courtes que l'arête centrale permettent aussi de réduire l'ingestion latérale de gaz chauds dans la portion de diffusion.

Ainsi, dans des sections formées par un plan normal à l'axe d'écoulement et coupant l'arête centrale, le point de l'arête centrale passant par ce plan est le point le plus éloigné de l'axe d'écoulement parmi tous les points de la troisième surface contenus dans cette section.

L'arête centrale permet ainsi d'éloigner progressivement une fraction du fluide de refroidissement de l'axe d'écoulement et des principales zones d'influence des tourbillons contrarotatifs se formant au niveau de la section de sortie de l'orifice de refroidissement.

De part et d'autre de l'arête centrale, la surface évasée s'étend de manière à former des parties de surface appelées portions de guidage d'écoulement.

De telles portions de guidage permettent de guider une fraction du fluide de refroidissement vers la sortie par le fond de la portion de diffusion.

Compte tenu de l'orientation de l'arête centrale et du fait que celle-ci forme un fond de la portion de diffusion, les portions de guidage permettent de réduire le risque d'ingestion de gaz chauds, en particulier au niveau de l'extrémité aval du fond de la portion de diffusion, en éloignant progressivement les tourbillons contrarotatifs du fond de la portion de diffusion.

L'invention permet ainsi d'améliorer l'efficacité du refroidissement. De plus, d'une manière simple et performante, l'invention propose une architecture d'orifice de refroidissement structurée, de l'anglais « shaped hole », qui permet de s'approcher fortement de la fonction conférée par un orifice de refroidissement structurée du type monolobe, à savoir de canaliser un flux d'air froid au centre qui est protégé des tourbillons contrarotatifs en bord d'orifice. L'absence de lobe facilite en effet la fabrication de l'ensemble.

Selon une première variante de réalisation, les portions de guidage sont planes.

Selon cette première variante, la portion de diffusion présente, dans un plan orthogonal à l'axe d'écoulement, une section ayant une partie formant un « V », définissant une demi-section de forme triangulaire ayant un sommet formé par l'arête centrale.

Selon une deuxième variante de réalisation, les portions de guidage sont incurvées, présentant par exemple une forme convexe ou concave.

Selon cette deuxième variante, la portion de diffusion peut présenter, dans un plan orthogonal à l'axe d'écoulement, une section ayant une partie formant un « V » déformé, définissant une demi-section de forme quasi-triangulaire ayant un sommet formé par l'arête centrale.

Lorsque la troisième surface comprend des arêtes latérales telles que définies ci-dessus, celles-ci sont de préférence inclinées par rapport à l'arête centrale.

Les arêtes latérales peuvent par ailleurs être orientées par rapport à l'axe d'écoulement de sorte que chacune d'elle s'éloigne de l'axe d'écoulement dans un sens allant de la première surface vers la deuxième surface.

Dans un mode de réalisation, les arêtes latérales intersectent l'arête centrale dans une section d'entrée de la portion de diffusion.

Dans un autre mode de réalisation, les arêtes latérales n'intersectent pas l'arête centrale. La portion de diffusion est de préférence dépourvue de lobe.

Dans un mode de réalisation, la surface évasée est symétrique par rapport à un plan passant par l'arête centrale.

Ce plan peut être un plan de symétrie pour la portion de diffusion dans son ensemble et/ou pour la surface évasée et/ou pour les arêtes latérales.

L'invention a aussi pour objet une turbine pour turbomachine, comprenant une roue mobile, un distributeur et au moins un composant tel que défini ci-dessus formant une aube de la roue mobile ou du distributeur.

L'invention a aussi pour objet une chambre de combustion pour turbomachine, comprenant au moins un composant tel que défini ci-dessus formant une paroi de la chambre de combustion.

L'invention a aussi pour objet une turbomachine pour un aéronef tel qu'un avion ou un hélicoptère, comprenant une telle turbine et/ou une telle chambre de combustion.

Selon un autre aspect, l'invention a pour objet un procédé de fabrication d'un composant tel que défini ci-dessus.

Dans un mode de réalisation, le procédé comprend une étape d'usinage par électroérosion de la portion de diffusion.

Dans un mode de réalisation, le procédé comprend une étape de traitement par laser de la portion de diffusion, en particulier de la surface évasée.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en coupe longitudinale d'un ensemble propulsif d'aéronef ;
[Fig. 2] est une vue schématique en perspective d'une aube de roue mobile d'une turbine de l'ensemble propulsif de la figure 1 ;
[Fig. 3] est une vue schématique en coupe transversale d'une paroi comprenant un orifice de refroidissement conforme à un premier mode de réalisation de l'invention ;
[Fig. 4] est une vue schématique en perspective d'une surface délimitant un orifice de refroidissement conforme au premier mode de réalisation de l'invention ;
[Fig. 5] est une vue schématique en perspective d'une portion de diffusion de l'orifice de refroidissement de la figure 4 ;
[Fig. 6] est une vue schématique en perspective de la portion de diffusion de l'orifice de refroidissement de la figure 4 ;
[Fig. 7] est une vue schématique en perspective d'une surface délimitant une portion de diffusion d'un orifice de refroidissement conforme à un deuxième mode de réalisation de l'invention ;
[Fig. 8] est une vue schématique de parties de surface concaves formant des portions de guidage d'un orifice de refroidissement conforme à l'invention ;
[Fig. 9] est une vue schématique de parties de surface convexes formant des portions de guidage d'un orifice de refroidissement conforme à l'invention.

### Description détaillée de modes de réalisation

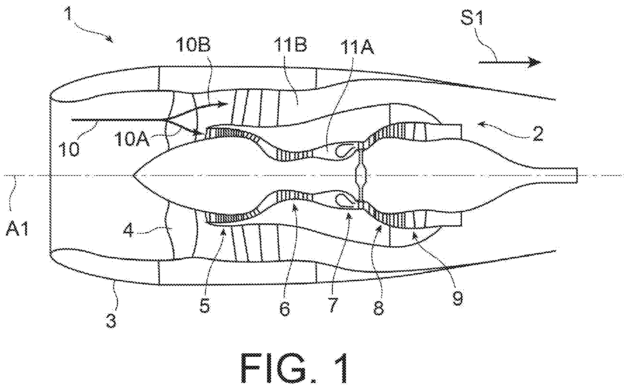

La figure 1 montre un ensemble propulsif 1 d'aéronef (non représenté) comprenant une turbomachine 2 et une nacelle 3 s'étendant autour d'un axe central longitudinal A1.

Par la suite, les termes « amont » et « aval » sont définis relativement à un sens S1 d'écoulement des gaz à travers l'ensemble propulsif 1 le long de l'axe A1.

Dans l'exemple de la figure 1, la turbomachine 2 est un turboréacteur à double flux comprenant, de l'amont vers l'aval, une soufflante 4, un compresseur basse pression 5, un compresseur haute pression 6, une chambre de combustion 7, une turbine haute pression 8 et une turbine basse pression 9. Les compresseurs 5 et 6, la chambre de combustion 7 et les turbines 8 et 9 forment un générateur de gaz.

Lors du fonctionnement du turboréacteur 2, un écoulement d'air 10 pénètre dans l'ensemble propulsif 1 par une entrée d'air de la nacelle 3, traverse la soufflante 4 puis se divise en un flux primaire 10A central et un flux secondaire 10B. Le flux primaire 10A s'écoule dans un conduit primaire 11A de circulation des gaz au sein du générateur de gaz. Le flux secondaire 10B s'écoule quant à lui dans un conduit secondaire 11B entourant le générateur de gaz et délimité radialement vers l'extérieur par la nacelle 3.

De manière connue en soi, les turbines 8 et 9 comprennent chacune au moins un distributeur et au moins une roue mobile comportant chacun des aubes, visibles sur la figure 1, qui s'étendent dans le conduit primaire 11A.

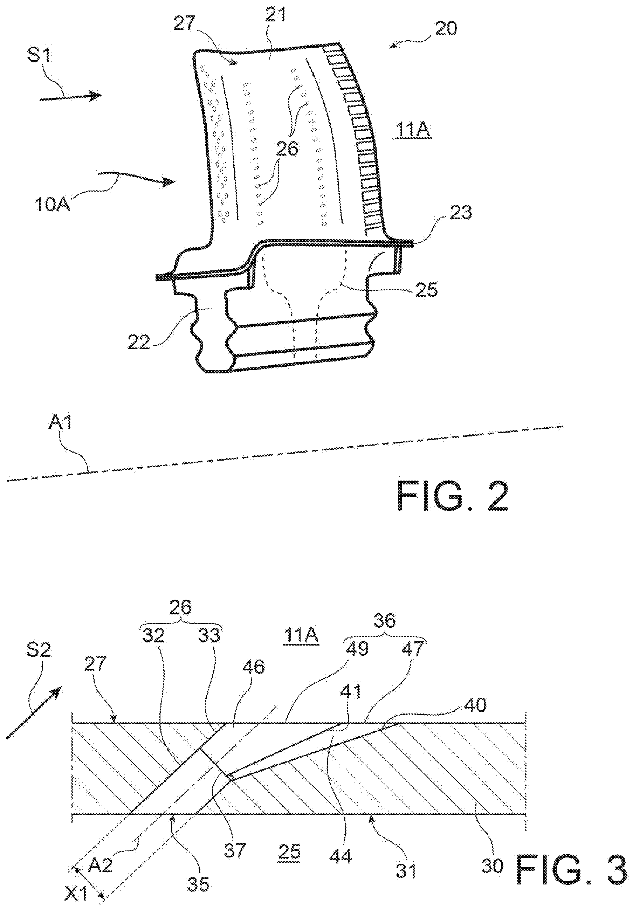

La figure 2 montre une aube 20 pour une roue mobile équipant dans cet exemple la turbine haute pression 8.

L'aube 20 présente une structure générale conventionnelle, incluant une pale 21, un pied 22 destiné à coopérer avec un logement d'un disque (non représenté) de la roue mobile et une plateforme 23 destinée à délimiter radialement vers l'intérieur le conduit primaire 11A.

En service, la pale 21 s'étend dans le conduit primaire 11A et est par conséquent exposée aux gaz chauds provenant de la chambre de combustion 7 (voir figure 1).

Le turboréacteur 2 comprend un circuit de refroidissement permettant d'acheminer de l'air frais jusque dans une cavité interne 25 de l'aube 20.

L'aube 20 comprend des orifices de refroidissement 26 reliant une surface interne (non visible sur la figure 2) de la pale 21 à une surface externe 27 de la pale 21, la surface interne délimitant la cavité interne 25, la surface externe 27 étant exposée au flux primaire 10A.

Les orifices de refroidissement 26 permettent d'évacuer une partie de l'air frais circulant dans la cavité interne 25 de l'aube 20 de manière à former sur la surface externe 27 un film d'air frais protégeant la pale 21 des gaz chauds de combustion 10A.

L'invention se rapporte à la géométrie de tels orifices de refroidissement 26.

Il est représenté à la figure 3 une partie d'une paroi 30 comprenant un orifice de refroidissement 26 conforme à l'invention.

L'orifice de refroidissement 26 présente un axe d'écoulement A2.

La paroi 30 comprend une première surface 31 délimitant un premier espace 25 et une deuxième surface 27, opposée par rapport à la première surface 31, délimitant un deuxième espace 11A.

La distance entre la première surface 31 et la deuxième surface 27 définit une épaisseur de la paroi 30.

L'orifice de refroidissement 26 est configuré pour acheminer un fluide de refroidissement circulant dans le premier espace 25 jusque dans le deuxième espace 11A à travers la paroi 30, c'est-à-dire de la première surface 31 à la deuxième surface 27, de manière à former un film de fluide de refroidissement sur la deuxième surface 27.

Dans cet exemple, la paroi 30 de la figure 3 forme la pale 21 de l'aube 20 de la figure 2, de sorte que ladite première surface 31 forme la surface interne de la pale 21, ladite deuxième surface forme la surface externe 27 de la pale 21, ledit premier espace corresponde à la cavité interne 25 de l'aube 20 et ledit deuxième espace corresponde au conduit primaire 11A du turboréacteur 2.

De manière non limitative, dans des modes de réalisation non détaillés, la paroi 30 de la figure 3 peut former une aube de roue mobile et/ou de distributeur de la turbine haute pression 8 et/ou de la turbine basse pression 9 et/ou une paroi de la chambre de combustion 7. La présente description s'applique par analogie à ces modes de réalisation.

Bien entendu, la paroi 30 peut comprendre plusieurs orifices de refroidissement 26 tels que décrits ci-après en référence aux figures 3 et suivantes.

En référence à la figure 3, l'orifice de refroidissement 26 comprend une portion de dosage 32, ou portion calibrante, qui débouche sur la première surface 31 de manière à former une entrée 35 de l'orifice de refroidissement 26 et une portion de diffusion 33 qui débouche sur la deuxième surface 27 de manière à former une sortie 36 de l'orifice de refroidissement 26.

Dans cet exemple, la portion de dosage 32 a une section cylindrique de diamètre X1 et présente un axe central formant ledit axe d'écoulement A2.

L'axe d'écoulement est oblique par rapport à la première surface 31 et la deuxième surface 27.

La portion de dosage 32 permet de doser ou calibrer la quantité d'air de refroidissement pénétrant dans l'orifice de refroidissement 26 par l'entrée 35, en provenance du premier espace 25.

La portion de diffusion 33 prolonge la portion de dosage 32 de sorte que le flux d'air pénétrant dans l'orifice de refroidissement 26 par l'entrée 35 puisse en sortir par la sortie 36.

En référence à un sens d'écoulement S2 du flux d'air de refroidissement traversant ainsi l'orifice de refroidissement 26, l'extrémité aval 37 de la portion de dosage 32, c'est-à-dire la sortie de la portion de dosage 32, constitue l'extrémité amont de la portion de diffusion 33, c'est-à-dire l'entrée de la portion de diffusion 33.

La portion de diffusion 33 est évasée de sorte que la section de sortie 36 ait une aire supérieure à l'aire de l'extrémité amont 37 de la portion de diffusion 33 et par conséquent supérieure à l'aire de la section d'entrée 35.

La portion de diffusion 33 est formée par enlèvement de matière dans la paroi 30 de sorte que celle-ci forme une troisième surface qui délimite la portion de diffusion 33.

Dans le mode de réalisation des figures 3 à 6, la troisième surface comprend une arête centrale 40 et deux arêtes latérales 41 et 42.

Dans cet exemple, les arêtes 40, 41 et 42 sont droites, c'est-à-dire rectilignes sur toute leur étendue.

L'arête centrale 40 s'étend le long de l'axe d'écoulement A2 et est inclinée, oblique, par rapport à l'axe d'écoulement A2 (voir figure 3).

Plus précisément, l'arête centrale 40 est orientée par rapport à l'axe d'écoulement A2 de manière à s'éloigner de celui-ci dans le sens d'écoulement S2.

Les arêtes latérales 41 et 42 s'étendent elles aussi le long de l'axe d'écoulement A2 en étant chacune obliques par rapport à l'axe d'écoulement A2 de manière à s'éloigner de celui-ci dans le sens d'écoulement S2 (voir figure 3).

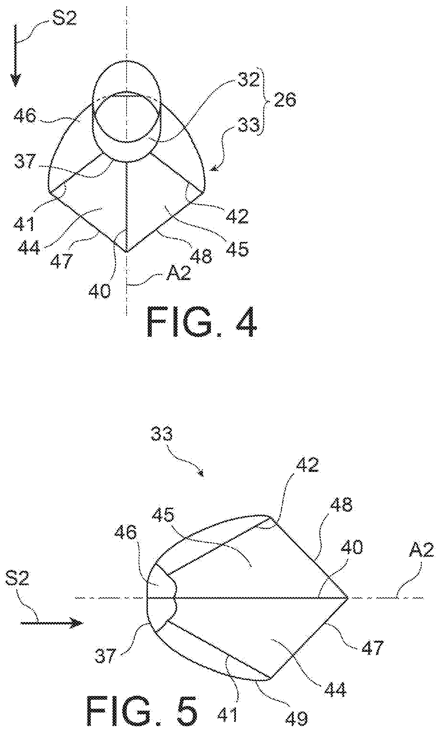

La troisième surface est dans cet exemple segmentée en trois parties de surface 44, 45 et 46 (voir figure 4).

La partie de surface 44 est délimitée par l'arête centrale 40 et par l'arête latérale 41, la partie de surface 45 est délimitée par l'arête centrale 40 et par l'arête latérale 42, tandis que la partie de surface 46 est délimitée par les arêtes latérales 41 et 42.

Les parties de surface 44 et 45 forment une surface évasée de la portion de diffusion 33.

Dans ce mode de réalisation, les parties de surface 44 et 45 sont planes et la partie de surface 46 est incurvée.

Dans cet exemple, les parties de surface 44 à 46 sont lisses, c'est-à-dire dépourvues de discontinuité.

En référence aux figures 3 et 4, la section de sortie 36 de l'orifice de refroidissement 26 est formée par deux arêtes rectilignes 47 et 48 et par une ligne courbe 49.

Les arêtes 47 et 48 sont formées par un bord des parties de surface 44 et 45, respectivement, tandis que la ligne 49 est formée par un bord de la partie de surface 46.

Les arêtes 47 et 48 ainsi que la ligne 49 de section de sortie délimitent ainsi la troisième surface et la deuxième surface 27 l'une par rapport à l'autre.

Ainsi, dans ce mode de réalisation, la partie de surface 44 est délimitée par l'arête centrale 40, l'arête latérale 41, l'arête de section de sortie 47 et par un premier tronçon de l'entrée 37 de la portion de diffusion 33. La partie de surface 45 est délimitée par l'arête centrale 40, l'arête latérale 42, l'arête de section de sortie 48 et par un deuxième tronçon de l'entrée 37 de la portion de diffusion 33. Enfin, la partie de surface 46 est délimitée par les arêtes latérales 41 et 42, par la ligne de section de sortie 49 et par un troisième tronçon de l'entrée 37 de la portion de diffusion 33.

Dans cet exemple, la portion de diffusion 33 présente un plan de symétrie transversal passant par l'arête centrale 40 et par l'axe d'écoulement A2.

Autrement dit, la portion de diffusion 33 comprend deux demi-parties symétriques par rapport à un plan transversal passant par l'arête centrale 40.

En référence aux figures 3 et 5, l'arête centrale 40 a une longueur supérieure à celle de chacune des arêtes latérales 41 et 42 et supérieure à celle de toute ligne parallèle à l'arête centrale 40 formée par la troisième surface.

L'arête centrale 40 forme ainsi un fond de la portion de diffusion 33 de sorte que, dans toute section formée par un plan normal à l'axe d'écoulement A2 et coupant l'arête centrale 40, le point de l'arête centrale 40 passant par ce plan est le point le plus éloigné de l'axe d'écoulement A2 parmi tous les points de la troisième surface contenus dans cette section.

Dans l'exemple de la figure 3, la troisième surface forme, en vis-à-vis de l'arête centrale 40 par rapport à l'axe d'écoulement A2, une ligne de crête qui s'étend de l'entrée 37 de la portion de diffusion 33 jusqu'à la sortie 36 de l'orifice de refroidissement parallèlement à l'axe d'écoulement A2.

Cette ligne de crête s'étend plus précisément à une distance de l'axe d'écoulement A2 qui correspond à la moitié du diamètre X1 de la portion de dosage 32.

Dans cet exemple, dans toute section formée par un plan normal à l'axe d'écoulement A2 et coupant la ligne de crête, le point de cette ligne de crête passant par ce plan est le point le plus proche de l'axe d'écoulement A2 parmi tous les points de la troisième surface contenus dans cette section.

L'orifice de refroidissement 26 de l'invention permet de réduire la formation de tourbillons contrarotatifs dans le fond de la portion de diffusion 33, en particulier sur un tronçon aval de la portion de diffusion 33, et permet ainsi de canaliser une fraction du fluide de refroidissement en-dehors d'une zone d'influence de tels tourbillons.

La fonction de canalisation est notamment assurée par les parties de surface 44 et 45 qui forment ainsi des portions de guidage.

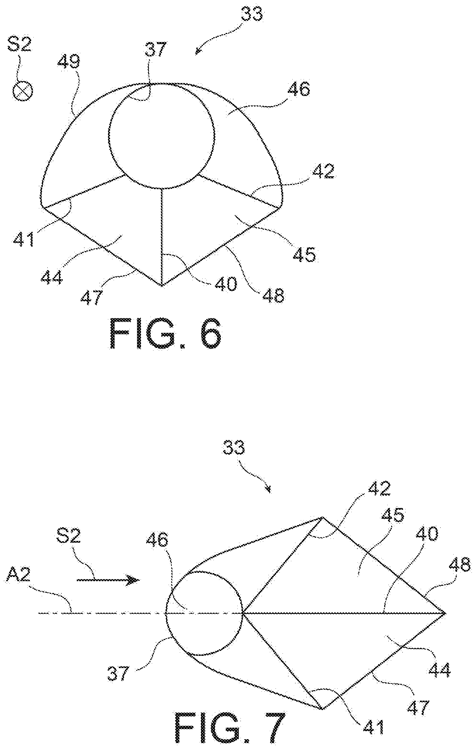

Dans le mode de réalisation des figures 3 à 6, l'arête centrale 40 et les arêtes latérales 41 et 42 ne se rejoignent pas ni ne se coupent. En référence aux figures 3 et 6, les arêtes 40-42 forment dans la section d'entrée 37 de la portion de diffusion 33 des points différents qui ont une coordonnée circonférentielle respective autour de l'axe d'écoulement A2.

Le mode de réalisation de la figure 7 se distingue de celui des figures 3 à 6 en ce que les arêtes latérales 41 et 42 intersectent l'arête centrale 40 dans la section d'entrée 37 de la portion de diffusion 33.

Dans les modes de réalisation décrits ci-dessus, les portions de guidage 44 et 45 sont planes.

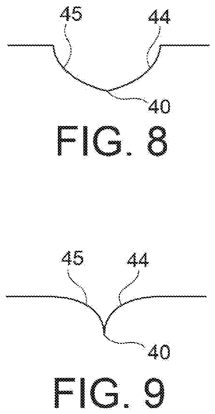

Alternativement, les portions de guidage 44 et 45 peuvent être incurvées, par exemple de manière à former des parties de surface concaves (figure 8) ou convexe (figure 9).

Dans l'invention, la portion de diffusion 33 est dépourvue de lobe, facilitant ainsi sa réalisation.

Les inventeurs ont estimé qu'un orifice de refroidissement 26 comprenant une portion de diffusion 33 telle qu'illustrée à la figure 4 permet d'obtenir un gain d'efficacité de refroidissement de près de vingt pourcent par rapport à une portion de diffusion conventionnelle, à taux de soufflage équivalent.

## Revendications

1. Composant (20) pour turbomachine (2), comprenant une paroi (30) présentant une première surface (31) et une deuxième surface (27) opposée par rapport à la première surface (31), la paroi (30) comprenant au moins un orifice de refroidissement (26) qui présente un axe d'écoulement (A2) et qui est configuré pour acheminer un fluide de refroidissement de la première (31) à la deuxième surface (27) à travers la paroi (30), l'orifice de refroidissement (26) comprenant une portion de dosage (32) qui débouche sur la première surface (31) et une portion de diffusion (33) dépourvue de lobe et qui débouche sur la deuxième surface (27), la portion de diffusion (33) étant délimitée par une surface évasée (44, 45), la surface évasée (44, 45) comprenant une arête centrale (40) formant un fond de la portion de diffusion (33), la surface évasée (34) comprenant deux arêtes latérales (41, 42) qui délimitent de part et d'autre latéralement la surface évasée (44, 45) et définissent chacune avec l'arête centrale (40) une portion de guidage (44, 45) d'écoulement,
l'arête centrale (40) et les arêtes latérales (41, 42) étant rectilignes sur toute leur étendue allant d'une section d'entrée (37) de la portion de diffusion (33) à une sortie (36) de l'orifice de refroidissement (26), **caractérisé en ce que** l'arête centrale (40) a une longueur supérieure à celle de chacune des arêtes latérales (41, 42).

2. Composant (20) selon la revendication 1, dans lequel les portions de guidage (44, 45) sont planes.

3. Composant (20) selon la revendication 1 ou 2, dans lequel les arêtes latérales (41, 42) sont inclinées par rapport à l'arête centrale (40).

4. Composant (20) selon l'une quelconque des revendications 1 à 3, dans lequel les arêtes latérales (41, 42) intersectent l'arête centrale (40) dans la section d'entrée (37) de la portion de diffusion (33).

5. Composant (20) selon l'une quelconque des revendications 1 à 4, dans lequel la surface évasée (44, 45) est symétrique par rapport à un plan passant par l'arête centrale (40).

6. Turbine (8, 9) pour turbomachine (2), comprenant une roue mobile, un distributeur et au moins un composant (20) selon l'une quelconque des revendications 1 à 5 formant une aube (20) de la roue mobile ou du distributeur.

7. Chambre de combustion (7) pour turbomachine (2), comprenant au moins un composant selon l'une quelconque des revendications 1 à 5 formant une paroi (30) de la chambre de combustion.

8. Turbomachine (2) pour un aéronef tel qu'un avion ou un hélicoptère, comprenant une turbine (8, 9) selon la revendication 6 et/ou une chambre de combustion (7) selon la revendication 7.

## Patentansprüche

1. Bauteil (20) für eine Turbomaschine (2), umfassend eine Wand (30), die eine erste Oberfläche (31) und eine der ersten Oberfläche (31) gegenüberliegende zweite Oberfläche (27) aufweist, wobei die Wand (30) mindestens eine Kühlöffnung (26) umfasst, die eine Strömungsachse (A2) aufweist und dazu eingerichtet ist, ein Kühlfluid durch die Wand (30) von der ersten Oberfläche (31) zu der zweiten Oberfläche (27) zu leiten, wobei die Kühlöffnung (26) einen Dosierabschnitt (32), der in die erste Oberfläche (31) mündet, und einen Diffusionsabschnitt (33), der ohne Lappen ausgebildet ist und in die zweite Oberfläche (27) mündet, umfasst, wobei der Diffusionsabschnitt (33) durch eine aufgeweitete Fläche (44, 45) begrenzt ist, wobei die aufgeweitete Fläche (44, 45) eine Mittelkante (40), die einen Grund des Diffusionsabschnitts (33) bildet, sowie zwei Seitenkanten (41, 42) umfasst, welche die aufgeweitete Fläche (44, 45) auf beiden Seiten seitlich begrenzen und jeweils zusammen mit der Mittelkante (40) einen Strömungsführungsabschnitt (44, 45) definieren, wobei die Mittelkante (40) und die Seitenkanten (41, 42) über ihre gesamte Erstreckung von einem Eintrittsquerschnitt (37) des Diffusionsabschnitts (33) bis zu einem Austritt (36) der Kühlöffnung (26) geradlinig sind, **dadurch gekennzeichnet, dass** die Mittelkante (40) eine größere Länge als jede der Seitenkanten (41, 42) aufweist.

2. Bauteil (20) nach Anspruch 1, wobei die Strömungsführungsabschnitte (44, 45) eben sind.

3. Bauteil (20) nach Anspruch 1 oder 2, wobei die Seitenkanten (41, 42) gegenüber der Mittelkante (40) geneigt sind.

4. Bauteil (20) nach einem der Ansprüche 1 bis 3, wobei die Seitenkanten (41, 42) die Mittelkante (40) im Eintrittsquerschnitt (37) des Diffusionsabschnitts (33) schneiden.

5. Bauteil (20) nach einem der Ansprüche 1 bis 4, wobei die aufgeweitete Fläche (44, 45) bezüglich einer durch die Mittelkante (40) verlaufenden Ebene symmetrisch ist.

6. Turbine (8, 9) für eine Turbomaschine (2), umfassend ein Laufrad, ein Leitrad und mindestens ein Bauteil (20) nach einem der Ansprüche 1 bis 5, das eine Schaufel (20) des Laufrads oder des Leitrads bildet.

7. Brennkammer (7) für eine Turbomaschine (2), umfassend mindestens ein Bauteil nach einem der Ansprüche 1 bis 5, das eine Wand (30) der Brennkammer bildet.

8. Turbomaschine (2) für ein Luftfahrzeug, wie etwa ein Flugzeug oder einen Hubschrauber, umfassend eine Turbine (8, 9) nach Anspruch 6 und/oder eine Brennkammer (7) nach Anspruch 7.

## Claims

1. Turbomachine (2) component (20), comprising a wall (30) having a first surface (31) and a second surface (27) opposite the first surface (31), the wall (30) comprising at least one cooling hole (26), which has a flow axis (A2) and is designed to convey a cooling fluid from the first (31) to the second surface (27) through the wall (30), the cooling hole (26) comprising a metering portion (32), which opens onto the first surface (31), and a diffusion portion (33) without any lobe and which opens onto the second surface (27), the diffusion portion (33) being delimited by a tapered surface (44, 45), the tapered surface (44, 45) comprising a central edge (40) forming a bottom of the diffusion portion (33),
the tapered surface (34) comprising two lateral edges (41, 42), which laterally delimit the tapered surface (44, 45) on both sides and each define a flow guiding portion (44, 45) with the central edge (40),
the central edge (40) and the lateral edges (41, 42) being rectilinear over their entire extension from an inlet section (37) of the diffusion portion (33) to an outlet (36) of the cooling hole (26), **characterized in that** said central edge (40) a has a greater length than that of each of the lateral edges (41, 42).

2. Component (20) according to Claim 1, wherein the guiding portions (44, 45) are flat.

3. Component (20) according to Claim 1 or 2, wherein the lateral edges (41, 42) are inclined with respect to the central edge (40).

4. Component (20) according to any one of Claims 1 to 3, wherein the lateral edges (41, 42) intersect the central edge (40) in the inlet section (37) of the diffusion portion (33).

5. Component (20) according to any one of Claims 1 or 4, wherein the tapered surface (44, 45) is symmetrical with respect to a plane passing through the central edge (40).

6. Turbine (8, 9) for a turbomachine (2), comprising an impeller, a nozzle and at least one component (20) according to any one of claims 1 to 5 forming a blade (20) of the impeller or nozzle.

7. Combustion chamber (7) for a turbomachine (2), comprising at least one component according to any one of claims 1 to 5 forming a wall (30) of the combustion chamber.

8. Turbomachine (2) for an aircraft such as an aeroplane or a helicopter, comprising a turbine (8, 9) according to Claim 6 and/or a combustion chamber (7) according to claim 7.
